# EUROPEAN PATENT APPLICATION

(11) **EP 4 647 382 A1**
(43) Date of publication of application: **12.11.2025**
(21) Application number: 25173410.9
(22) Date of filing: 29.04.2025
(51) Int. Cl.: B65H 20/14

(54) **SYSTEM AND METHOD FOR TRANSPORTING SEPARATOR BY USING AIR GUIDE ROLLER**

(30) Priority: 08.05.2024 KR 20240060794
(71) Applicant: SAMSUNG SDI CO., LTD., Yongin-si, Gyeonggi-do 17084 (KR)
(72) Inventor: JO, Myeongjun, 17084 Yongin-si (KR)
(74) Representative: Marks & Clerk LLP

(57) **Abstract**

A system for transporting a separator (12) by using an air guide roller (100) includes an air guide roller controller and an air guide roller configured to receive a control command from the air guide roller controller and to spray the air onto one surface of a separator (12) when the separator (12) travels.

## Description

### BACKGROUND

### 1. Field

Aspects of embodiments of the present disclosure relate to a system and method for transporting a separator by using an air guide roller.

### 2. Description of the Related Art

Compared to a multi-functional separator (MFS), a multi-coated separator (H-MCS) may move (or travel) due to a severe electrostatic characteristic that occurs when the ratio of a binder on a surface of the separator is increased.

The above information disclosed in this Background section is for enhancement of understanding of the background of the present disclosure, and therefore, it may contain information that does not constitute related (or prior) art.

### SUMMARY

Embodiments of the present disclosure provide a system and method for transporting a separator that can reduce friction between the separator and a roller when the separator, or a stack instrument of the separator, moves (or travels) by using an air guide roller. There is also provided a transport system and method which prevents a failure that occurs when a separator travels while driving by using an air guide roller.

However, aspects and features of the present disclosure are not limited to those mentioned above, and other aspects and features of not mentioned can be clearly understood by those skilled in the art from the description of the disclosure described below.

According to an embodiment of the present disclosure, a system for transporting a separator by using an air guide roller includes an air guide roller controller and an air guide roller configured to receive a control command from the air guide roller controller and to spray air onto one surface of a separator when the separator travels (or moves).

The air guide roller may be in a region where a force is concentrated while the separator, having an electrostatic characteristic of a refence numerical value or more due to a ceramic coating and binder coating, travels.

The air guide roller may be in a or the region where a bending angle of a path along which the separator travels is a reference angle or more.

The air guide roller may spray air from an inside of the air guide roller to the outside thereof through air holes. The air holes may each have a preset shape.

The air guide roller controller may be configured to transmit the control command according to an air spray pressure numerical value at which the separator is transported by being brought into contact with the air guide roller in the state in which the separator is not floated off the air guide roller.

According to another embodiment of the present disclosure, a method of transporting a separator by using an air guide roller includes: arranging an air guide roller having air holes in a region of a path along which a separator travels and transmitting an air spray control command according to an electrostatic characteristic of the separator.

The arranging of the air guide roller may include arranging the air guide roller according to a path along which air is sprayed from an inside of the air guide roller to an outside thereof.

The arranging of the air guide roller may include arranging the air guide roller in a region of the path along which the separator travels having a bending angle of a reference angle or more.

The transmitting of the air spray control command may include transmitting the air spray control command according to an air spray pressure numerical value at which the separator is transported by being brought into contact with the air guide roller in the state in which the separator is not floated off the air guide roller.

The transmitting of the air spray control command may include transmitting the air spray control command by adjusting an air spray cycle according to the electrostatic characteristic of the separator.

In an embodiment, a method of transporting a separator using an air guide roller, which is performed by a system for transporting a separator using an air guide roller, includes (a) disposing an air guide roller in which air holes have been formed in a preset region of a path along which a separator travels and (b) transmitting an air spray control command by considering an electrostatic characteristic of the separator.

The step (a) includes disposing the air guide roller including the air holes each formed to have a preset shape by considering a path along which air is sprayed from an inside of the air guide roller to an outside thereof.

The step (a) includes disposing the air guide roller in a region of the path along which the separator travels, which has a bending angle of a preset angle or more.

The step (b) includes transmitting the air spray control command by considering an air spray pressure numerical value at which the separator is transported by being brought into contact with the air guide roller in the state in which the separator has not been floated.

The step (b) includes transmitting the air spray control command by adjusting an air spray cycle by considering the electrostatic characteristic of the separator.

According to an embodiment of the present disclosure, a situation where the separator is broken due to friction with a roller is reduced or prevented because the separator travels along an air guide roller at a region at where a force is concentrated when the separator travels.

According to an embodiment of the present disclosure, a situation in which the separator is broken is reduced or prevented by controlling the separator to smoothly travel while coming into contact with the roller in the state in which the separator is floated off the air roller because air is sprayed onto one surface of the separator by the air guide roller when the separator travels.

The aspects and features of the present disclosure are not limited to those mentioned above, and other aspects and features of not mentioned will be clearly understood by those skilled in the art from the description below.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings:
FIG. 1 is a schematic illustration of an electrode assembly of a secondary battery;
FIG. 2 is a schematic illustration of a pouch-type secondary battery;
FIG. 3 is a schematic illustration of an external appearance of a prismatic secondary battery;
FIG. 4 is a cross-sectional view of a cylindrical secondary battery;
FIG. 5 illustrates aspects of a system for transporting a separator according to an embodiment of the present disclosure.
FIG. 6 is a cross-sectional view of an air guide roller according to an embodiment of the present disclosure.
FIG. 7 illustrates an air guide roller and a separator according to an embodiment of the present disclosure.
FIG. 8 is a block diagram for describing a computer system configured to implement a method according to an embodiment of the present disclosure;
FIG. 9 is a view of a secondary battery module in which secondary batteries manufactured according to the present disclosure are arranged;
FIG. 10 is a view of a secondary battery pack including the secondary battery module illustrated in FIG. 9; and
FIG. 11 is a schematic view of a vehicle including the secondary battery pack illustrated in FIG. 10.

### DETAILED DESCRIPTION

Hereinafter, embodiments of the present disclosure will be described, in detail, with reference to the accompanying drawings. The terms or words used in the present specification and claims are not to be limitedly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the embodiments of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. As being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

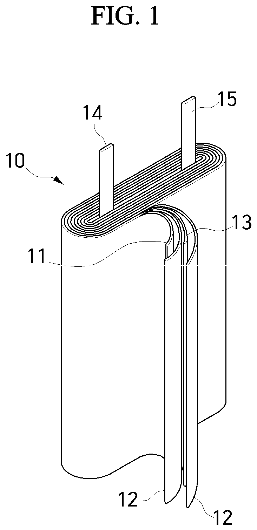

FIG. 1 is a schematic illustration of an electrode assembly of a secondary battery.

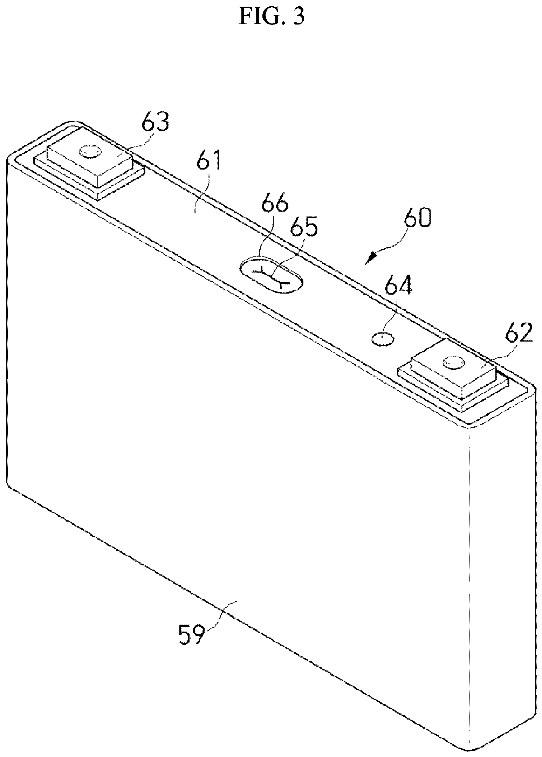

An electrode assembly 10 may be formed by winding or stacking a stack of a first electrode plate 11, a separator 12, and a second electrode plate 13, each of which are formed as thin plates or films. When the electrode assembly 10 is a wound stack, a winding axis may be parallel to the longitudinal direction of a case (see, e.g., the case 59 in FIG. 3). In other embodiments, the electrode assembly 10 may be a stack type rather than a winding type, but the shape of the electrode assembly 10 is not limited in the present disclosure. In addition, the electrode assembly 10 may be a Z-stack electrode assembly in which a positive electrode plate and a negative electrode plate are inserted into both sides of a separator, which is then bent (or folded) into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum or an aluminum alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

In some embodiments, the first electrode tab 14 may be located on (e.g., may protrude from) the left side of the electrode assembly 10, and the second electrode tab 15 may be located on (e.g., may protrude from) the right side of the electrode assembly 10. In other embodiments, the first electrode tab 14 and the second electrode tab 15 may be located on one side of the electrode assembly 10 in the same direction.

For convenience of description, the left and right sides of the electrode assembly are defined according to the electrode assembly 10 as oriented in FIG. 1, and the positions thereof may change when the secondary battery is rotated left and right or up and down.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

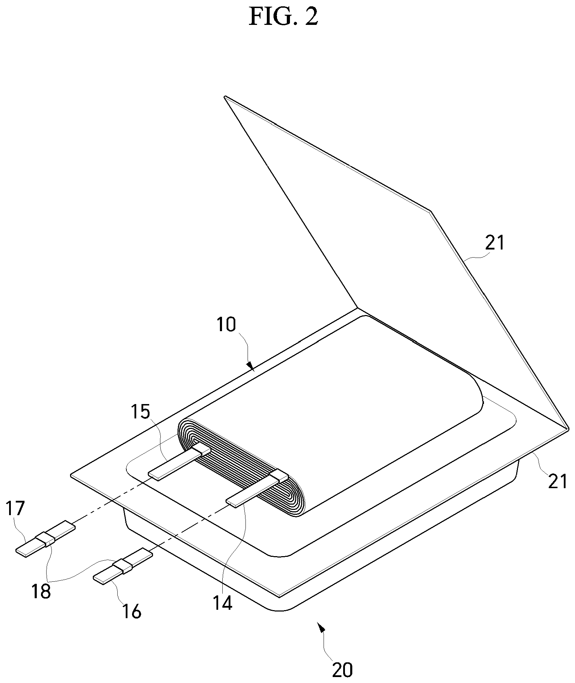

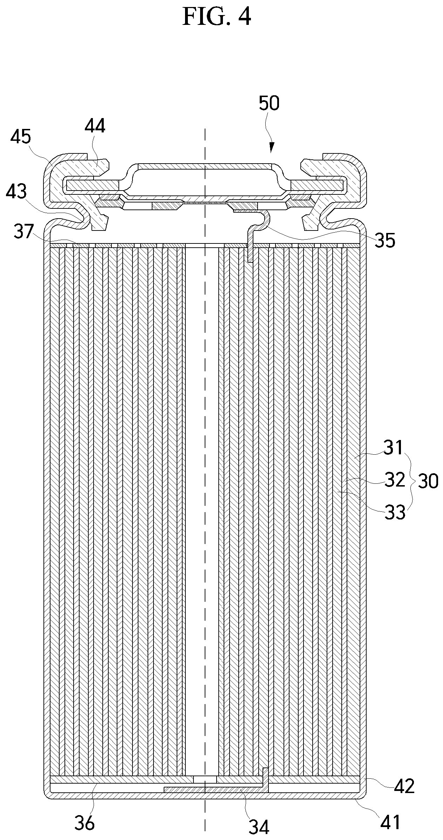

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 4).

FIG. 2 schematically illustrates the pouch-type secondary battery.

The pouch-type secondary battery includes an electrode assembly 10 and a pouch 20 that accommodates the electrode assembly 10.

The electrode assembly 10 may be the same as that illustrated in FIG. 1. The first electrode tab 14 and the second electrode tab 15 of the electrode assembly 10 may be electrically connected to respective external first and second terminal leads 16 and 17 by welding. Each of the first terminal lead 16 and the second terminal lead 17 may be attached with (e.g., covered by) a tab film 18 for insulation from the pouch 20.

The pouch 20 may be sealed by having sealing parts 21 at the edges thereof come into contact with each other while accommodating the electrode assembly 10 therein, and the sealing may be achieved with the tab film 18 interposed between the sealing parts 21. The sealing parts 21 of the pouch 20 may each be made of a thermal fusion material that generally exhibits weak adhesion to metal. Thus, the pouch 20 may be fused together by interposing the tab film 18 between the sealing parts 21 to ensure a sufficient seal.

FIG. 3 illustrates a schematic external appearance of a prismatic secondary battery.

A prismatic case 59 defines an overall appearance of the prismatic secondary battery and may be made of a conductive metal, such as aluminum, aluminum alloy, or nickel-plated steel. In addition, the case 59 may provide (or may form) a space for accommodating the electrode assembly 10 therein.

A cap assembly 60 may include a cap plate 61 that covers an opening in the case 59, and the case 59 and the cap plate 61 may be made of a conductive material. A first terminal 63 and a second terminal 62 may be electrically connected to the first electrode tab 14 and the second electrode tab 15 of the electrode assembly 10 inside the case 59 and may be installed to protrude outwardly through the cap plate 61.

The cap plate 61 may have an electrolyte injection port 64 formed to receive a sealing plug, and a vent 66 having a notch 65 may be formed in the cap plate 61. The vent 66 is for discharging excess gas generated inside the secondary battery.

FIG. 4 is a cross-sectional view of a cylindrical secondary battery.

The cylindrical secondary battery includes an electrode assembly 30, a case accommodating the electrode assembly 30 and an electrolyte therein, a cap assembly 50 coupled to an opening in the case to seal the case, and an insulating plate 37 located between the electrode assembly 30 and the cap assembly 50 inside the case.

The electrode assembly 30 may include a separator 32 and a first electrode 33 and a second electrode 31 between which the separator 32 is located, and the electrode assembly 30 may be wound in a jelly-roll form.

The first electrode 33 includes a first substrate and a first active material layer located on the first substrate. A first lead tab 35 may extend outwardly from a first uncoated portion of the first substrate at where the first active material layer is not located and may be electrically connected to the cap assembly 50.

The second electrode 31 includes a second substrate and a second active material layer located on the second substrate. A second lead tab 34 may extend outwardly from a second uncoated portion of the second substrate at where the second active material layer is not located and may be electrically connected to the case. The first lead tab 35 and the second lead tab 34 may extend in opposite directions from each other.

The first electrode 33 may act as a positive electrode. In such an embodiment, the first substrate may include (or may be composed of), for example, aluminum foil, and the first active material layer may include, for example, a transition metal oxide. The second electrode 31 may act as a negative electrode. In such an embodiment, the second substrate may include (or may be composed of), for example, copper foil or nickel foil, and the second active material layer may include, for example, graphite.

The separator 32 prevents a short-circuit between the first electrode 33 and the second electrode 31 while allowing movement of lithium ions therebetween. The separator 32 may be made of, for example, a polyethylene film, a polypropylene film, a polyethylene-polypropylene film, etc.

The case accommodates the electrode assembly 30 and the electrolyte therein and forms the external appearance of the secondary battery together with the cap assembly 50. The case may have a substantially cylindrical body portion 42 and a bottom portion 41 connected to (e.g., extending from) one side of the body portion 42. A beading part (e.g., a bead) 43 deformed inwardly may be formed in the body portion 42, and a crimping part (e.g., a crimp or a crimped end) 45 bent inwardly may be formed at an open end of the body portion 42. The case may be formed of iron plated with nickel, for example.

The beading part 43 can reduce or prevent movement of the electrode assembly 30 inside the case and facilitate seating of a gasket 44 and the cap assembly 50. A crimping part 45 may firmly fix the cap assembly 50 by pressing the edge of the cap assembly 50 against the gasket 44.

The cap assembly 50 may be fixed to the inside of the crimping part 45 by the gasket 44 to seal the case. The cap assembly 50 may include a cap up, a safety vent, a cap down, an insulating member, and a subplate but is not limited thereto and may be variously modified.

The cap up may be located at the very top of the cap assembly 50. The cap up may include a terminal portion that protrudes convexly upwardly and is connected to an external circuit, and an outlet for discharging gas may be located around the terminal portion.

The safety vent may be located below the cap up. The safety vent may include a protrusion that protrudes convexly downwardly and is connected to the subplate, and at least one notch may be located around the protrusion.

When gas is generated in the case due to, for example, overcharging or abnormal operation of the secondary battery, the protrusion may be deformed upwardly by pressure and separated from the subplate, while the safety vent may be cut (e.g., may burst) along the notch. The cut safety vent may prevent the secondary battery from exploding by discharging gas to the outside.

The cap down may be located below the safety vent. The cap down may have a first opening for exposing the protrusion of the safety vent and a second opening for discharging gas. The insulating member may be located between the safety vent and the cap down to insulate the safety vent and the cap down.

The subplate may be located below the cap down. The subplate may be fixed to a lower surface of the cap down to block the first opening in the cap down, and the protrusion of the safety vent may be fixed to the subplate. The first lead tab 35 of (e.g., extending from) the electrode assembly 30 may be fixed to the subplate. Accordingly, the cap up, the safety vent, the cap down, and the subplate may be electrically connected to the first electrode 33 of the electrode assembly 30.

The insulating plate 37 may be located below the beading portion 43 to be in contact with the electrode assembly 30 and may have a tab opening through which the first lead tab 35 passes. The cap assembly 50, which is electrically connected to the first electrode 33 by the first lead tab 35, may face the electrode assembly 30 with the insulating plate 37 interposed therebetween and may maintain an insulated (e.g., an electrically insulated) state from the electrode assembly 30 due to the insulating plate 37. In some embodiments, another insulating plate 36 may be included for insulation between the electrode assembly 30 and the bottom portion 41 of the case.

A separator, that is, one of the four materials of a battery along with a positive electrode material, a negative electrode material, and an electrolyte, may physically separate the positive electrode and the negative electrode from each so that the positive electrode and the negative electrode do not come into contact with each other within the battery and may also act as a passage along which lithium ions move between the positive electrode and the negative electrode due to fine processing called a pore.

There may occur a phenomenon in which a separator rolls in up and down directions in a corresponding roller and a roller adjacent to the corresponding roller in response to a left and right movement of the corresponding roller in multi-coated separator (MCS) driving equipment. Compared to a multi-function separator (MFS), a multi-coated separator (H-MCS) may experience severe electrostatic charge as the ratio of a binder on a surface of the separator is increased. The multi-coated separator (H-MCS) frequently experiences failures caused by the separator breaking when a force generated by electrostatic characteristics causes the separator to stick to a roller while traveling in stack equipment. This force interacts with the moving force of a table upon the JR stack, resulting in frequent breakages.

According to an embodiment of the present disclosure, friction between a separator and a roller that is disposed in a region on which a force is concentrated when a separator travels in a stack instrument may be reduced by replacing the roller with an air guide roller when the separator travels.

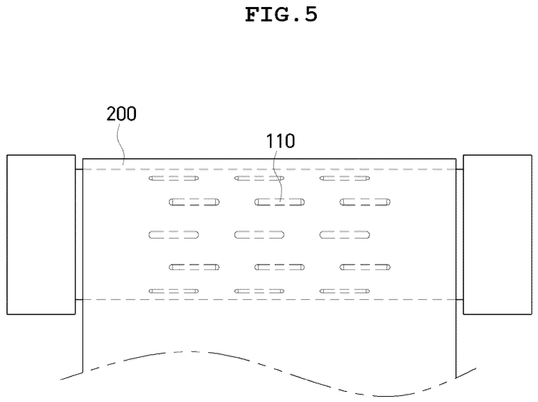

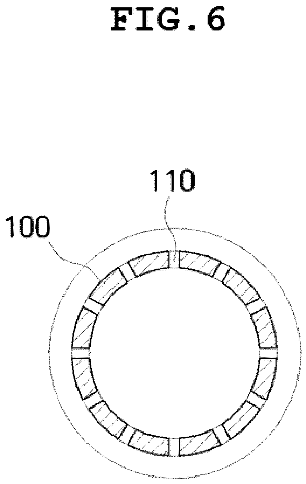

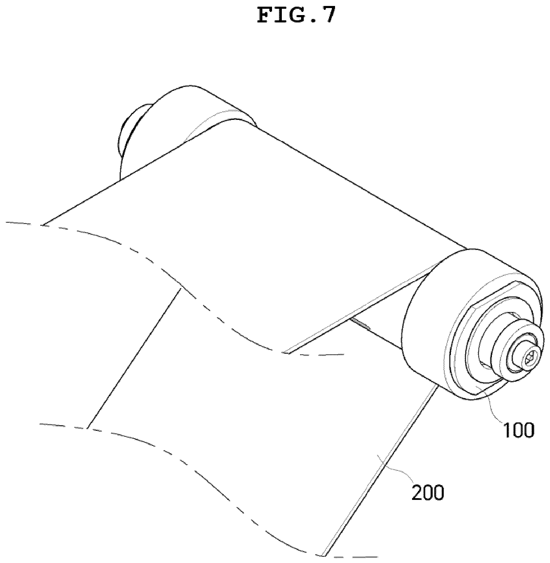

FIG. 5 illustrates aspects of a system for transporting a separator according to an embodiment of the present disclosure. FIG. 6 is a cross-sectional of an air guide roller according to an embodiment of the present disclosure. FIG. 7 illustrates the air guide roller and a separator according to an embodiment of the present disclosure.

A system for transporting a separator by using an air guide roller 100, according to an embodiment of the present disclosure, may include an air guide roller controller and the air guide roller 100 that receives a control command from the air guide roller controller and that sprays (e.g., emits) air toward (e.g., onto) one surface of a separator 200 when the separator 200 travels.

The air guide roller 100 may be disposed in a region in which a force is concentrated when the separator 200, having an electrostatic characteristic of a reference (or preset) numerical value or more by ceramic coating and binder coating, travels.

The air guide roller 100 may be disposed in a region where the bending angle of a path along which the separator 200 travels is a reference (or preset) angle or more.

The air guide roller 100 may spray air from the inside thereof to the outside thereof through air holes (e.g., air openings) 110, each having a shape (e.g., a preset shape).

Referring to FIG. 6, the air holes 110 may be disposed at intervals of about 30 degrees based on the center of the circular air guide roller 100.

According to another embodiment of the present disclosure, the air holes 110 may be disposed in some regions on a surface of the air guide roller 100. The air holes 110 may be formed so that the interval at which the air holes 110 have been disposed gradually becomes greater or gradually becomes smaller or gradually becomes greater and then gradually becomes smaller as the air hole becomes distant from a reference point of the surface of the air guide roller 100 in one direction along the circular circumference of the air guide roller 100.

According to another embodiment of the present disclosure, the air holes 110 may be formed so that the length or width of the air hole 110 gradually becomes greater, gradually becomes smaller, or gradually becomes greater and then gradually becomes smaller as the air hole becomes distant from the reference point of a surface of the air guide roller 100 in one direction along the circular circumference of the air guide roller 100.

According to another embodiment of the present disclosure, the air holes 110 may be disposed in some regions of a surface of the air guide roller 100 and may be formed so that the interval at which the air holes 110 have been disposed gradually becomes greater, gradually becomes smaller, gradually become greater and then gradually becomes smaller, gradually becomes smaller or gradually becomes greater from a center point in a region at where the air guide roller 100 comes into contact with the separator 200 toward the outside of the air guide roller (e.g., referring to FIG. 5, from the center point in the contact regions toward left and right sides).

According to another embodiment of the present disclosure, the air holes 110 may be formed so that the length or width of the air hole 110 gradually becomes greater, gradually becomes smaller, gradually become greater and then gradually becomes smaller, or gradually become smaller and then gradually becomes greater from a center point in a region in which the air guide roller 100 comes into contact with the separator 200 toward the outside of the air guide roller.

The air guide roller controller may transmit a control command by considering (e.g., according to) an air spray pressure numerical value at which the separator is transported by being brought into contact with the air guide roller 100 in the state in which the separator 200 is not floated off the guide roller 100 (e.g., is not elevated off the air guide roller 100).

The air guide roller controller may adjust an air spray cycle, may adjust the spray intensity (e.g., air pressure) of the air that is sprayed for each cycle, or may adjust air spray duration by comprehensively considering, or according to, an electrostatic characteristic and driving speed of the separator 200.

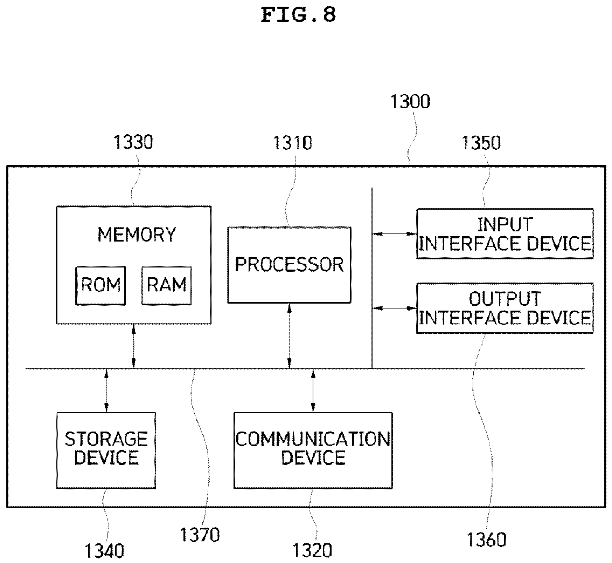

FIG. 8 is a block diagram for describing a computer system configured to implement a method according to an embodiment of the present disclosure.

The method of transporting a separator by using an air guide roller, according to an embodiment of the present disclosure, may include disposing an air guide roller in which air holes have been formed in a region in a path along which the separator travels and transmitting an air spray control command by considering (e.g., according to) an electrostatic characteristic of the separator.

The air guide roller having the air holes, each having a shape (e.g., a same or preset shape), may be disposed by considering a path along which the air is sprayed from the inside of the air guide roller to the outside thereof.

The air holes may be disposed in some regions on a surface of the air guide roller and may be formed so that the interval at which the air holes have been disposed gradually becomes greater, gradually becomes smaller, or gradually becomes greater and then gradually becomes smaller as the air hole becomes distant from a reference point on the surface of the air guide roller in one direction along the circular circumference of the air guide roller. Furthermore, the air holes may be formed so that the length or width of the air hole gradually becomes greater, gradually becomes smaller, or gradually becomes greater and then gradually becomes smaller as the air hole becomes distant from a reference point on a surface of the air guide roller in one direction along the circular circumference of the air guide roller.

The air holes may be disposed in some regions on a surface of the air guide roller and may be formed so that the interval at which the air holes have been disposed gradually becomes greater, gradually becomes smaller, gradually becomes greater and then gradually becomes smaller, or gradually becomes smaller and then gradually become greater from a center point in a region in which the air guide roller comes into contact with the separator toward the outside of the air guide roller. Furthermore, the air holes may be formed so that the length or width of the air hole gradually becomes greater, gradually becomes smaller, gradually becomes greater and then gradually becomes smaller, or gradually becomes smaller and then gradually becomes greater from a center point in a region in which the air guide roller comes into contact with the separator toward the outside of the air guide roller.

The air guide roller may be disposed in a region in which the bending angle of a path along which the separator travels is a reference (e.g., preset) angle or more.

The air spray control command may be transmitted by considering (e.g., according to) an air spray pressure numerical value at which the separator is transported by being brought into contact with the air guide roller in the state in which the separator is not floated. Accordingly, the separator can smoothly travel by spraying (or emitting) air while coming into contact with the air guide roller in the state in which the separator is not floated from (e.g., is not pushed off) the air guide roller.

The air spray control command that adjusts the air spray cycle by considering an electrostatic characteristic of the separator may be transmitted. The air spray cycle may be adjusted or the spray intensity of the air that is sprayed may be adjusted for each cycle by comprehensively considering, or according to, the electrostatic characteristic and the driving speed of the separator.

Referring to FIG. 8, the computer system 1300, according to one embodiment, may include at least one of a processor 1310, a memory 1330, an input interface device 1350, an output interface device 1360, and a storage device 1340 communicating with one another through a bus 1370. The computer system 1300 may also include a communication device 1320 coupled to a network. The processor 1310 may be a central processing unit (CPU) or a semiconductor device that executes instructions stored in the memory 1330 or the storage device 1340. The memory 1330 and the storage device 1340 may include various types of volatile or nonvolatile storage media. For example, the memory may include a read-only memory (ROM) and a random access memory (RAM). In embodiments of the present disclosure, the memory may be located inside or outside the processor and may be connected to the processor. The memory may be various suitable types of volatile or nonvolatile storage media, and for example, may include a read-only memory (ROM) or a random access memory (RAM).

A system for transporting a separator by using an air guide roller, according to an embodiment of the present disclosure, may include memory 1330 in which a separator transport program using the air guide roller has been stored and a processor 1310 that executes the separator transport program. The processor 1310 may transmit an air spray control command by considering an electrostatic characteristic of the separator.

The processor 1310 may transmit the air spray control command by considering an air spray pressure numerical value at which an MCS separator is transported by being brought into contact with the air guide roller in the state in which the separator is not floated.

The processor 1310 may transmit the air spray control command that adjusts the air spray cycle by considering an electrostatic characteristic of the separator and may adjust an air spray cycle, the spray intensity of the air that is sprayed for each cycle, and spray duration of the air by comprehensively considering an electrostatic characteristic and driving speed of the separator.

Accordingly, embodiments of the present disclosure may be implemented as a method implemented in a computer or a non-transitory computer-readable medium storing computer-executable instructions. In an embodiment, when executed by the processor, computer-readable instructions may perform a method according to at least one aspect of the present disclosure.

The communication device 1320 may transmit or receive wired signals or wireless signals.

Additionally, the method, according to an embodiment of the present disclosure, may be implemented in the form of program instructions that can be executed through various computer means and recorded on a computer-readable medium.

The computer-readable medium may include program instructions, data files, data structures, etc., singly or in combination. The program instructions recorded on the computer-readable medium may be specially designed and configured for embodiments of the present disclosure or may be known and usable by those skilled in the art of computer software. Computer-readable recording media may include a hardware device configured to store and perform program instructions. For example, the computer-readable recording media may be magnetic media, such as hard disks, floppy disks, and magnetic tapes, optical media, such as CD-ROMs and DVDs, magneto-optical media, such as floptical disks, ROM, RAM, flash memory, etc. The program instructions may include not only machine language codes, such as that generated by a compiler, but also high-level language codes that can be executed by a computer through an interpreter, etc.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

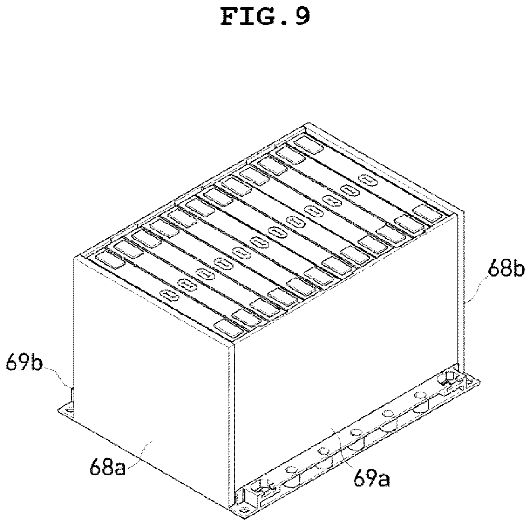

FIG. 9 is a perspective view of a secondary battery module in which prismatic secondary batteries are arranged according to embodiments of the present disclosure. With the increase in secondary battery capacity for driving electric vehicles or the like, a secondary battery module may be manufactured by arranging a plurality of secondary battery cells transversely and/or longitudinally and connecting them together. The plurality of secondary batteries may be arranged in a space defined by a pair of facing end plates 68a and 68b and a pair of facing side plates 69a and 69b. The secondary batteries may be arranged in an arrangement (direction) and number to obtain desired voltage and current specifications.

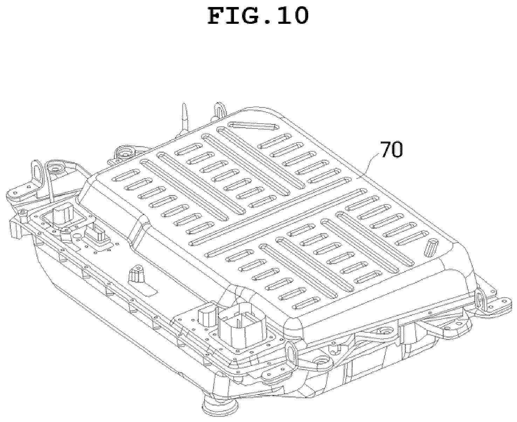

FIG. 10 is a perspective view of a battery pack 70 according to embodiments of the present disclosure. Referring to FIG. 10, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

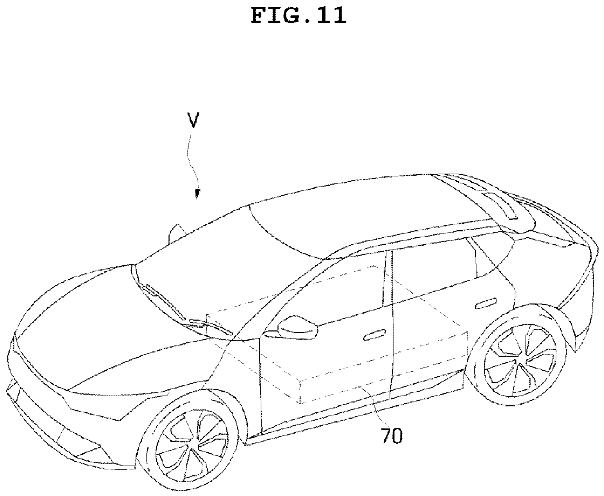

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 11 shows a vehicle V that includes the battery pack 70 shown in FIG. 10 on the lower body thereof. The vehicle V may operate by (e.g., may be powered by) receiving power from the battery pack 70.

Although the present disclosure has been described above with respect to embodiments thereof, the present disclosure is not limited thereto. Various modifications and variations can be made thereto by those skilled in the art within the scope of the appended claims.

According to the present disclosure, considering that the high investment cost per unit of a density meter makes it less economical in terms of cost when installed in various areas of a drying furnace and installation inside the drying furnace is difficult in terms of size, a difference in an ultrasonic transmission state due to a density difference depending on the drying status of an electrode plate is monitored through an ultrasonic sensor, and the amount of drying heat inside the drying furnace is controlled in real-time based on the monitoring results. Through this, when an electrode plate composition or a loading level is changed after a job change or the surrounding air temperature is changed due to seasonal effects, etc., it is possible to greatly reduce the trials and errors in a process of optimizing electrode plate drying conditions at the beginning of a process, minimize loss of the electrode plate, and improve the productivity of drying furnace equipment and the overall efficiency of an electrode plate drying process.

However, aspects and features of the present disclosure are not limited to the above-described aspects and features, and other aspects and features not mentioned will be clearly understood by those skilled in the art from the description of the present disclosure.

## Claims

1. A system for transporting a separator by using an air guide roller, the system comprising:
an air guide roller controller; and
the air guide roller configured to receive a control command from the air guide roller controller and to spray air onto one surface of the separator when the separator travels.

2. The system of claim 1, wherein the air guide roller is in a region where a force is concentrated while the separator, having an electrostatic characteristic of a reference numerical value or more due to a ceramic coating and binder coating, travels.

3. The system of claim 1 or claim 2, wherein the air guide roller is in a region where a bending angle of a path along which the separator travels is a reference angle or more.

4. The system of any one of the preceding claims, wherein the air guide roller sprays air from an inside of the air guide roller to an outside thereof through air holes.

5. The system of any one of the preceding claims, wherein the air guide roller controller is configured to transmit the control command according to an air spray pressure numerical value at which the separator is transported by being brought into contact with the air guide roller in a state in which the separator is not floated off the air guide roller.

6. A method of transporting a separator by using an air guide roller, the method comprising:
arranging an air guide roller having air holes in a region of a path along which the separator travels; and
transmitting an air spray control command according to an electrostatic characteristic of the separator.

7. The method of claim 6, wherein the arranging of the air guide roller comprises arranging the air guide roller by considering a path along which air is sprayed from an inside of the air guide roller to an outside thereof.

8. The method of claim 6 or claim 7, wherein the arranging of the air guide roller comprises arranging the air guide roller in a region of the path along which the separator travels having a bending angle of a reference angle or more.

9. The method of any one of claims 6 to 8, wherein the transmitting of the air spray control command comprises transmitting the air spray control command according to an air spray pressure numerical value at which the separator is transported by being brought into contact with the air guide roller in a state in which the separator is not floated off the air guide roller.

10. The method of any one of claims 6 to 9, wherein the transmitting of the air spray control command comprises transmitting the air spray control command by adjusting an air spray cycle according to the electrostatic characteristic of the separator.
